# EUROPEAN PATENT APPLICATION

(11) **EP 4 838 195 A1**
(43) Date of publication of application: **11.11.2026**
(21) Application number: 26176058.1
(22) Date of filing: 01.05.2026
(51) Int. Cl.: G01M 17/04, G01N 3/38

(54) **ADAPTIVE REAL-TIME GAIN SCHEDULING CONTROL LAW FOR DAMPER TEST SYSTEMS**

(30) Priority: 04.05.2025 US 202563799732 P
(71) Applicant: Illinois Tool Works Inc., Glenview IL 60025 (US)
(72) Inventor: SAARI, Byron John, Glenview, 60025 (US); ESPINDOLA, Andre Christian, Glenview, 60025 (US); RINGSVEN, Matthew J. Douglas, Glenview, 60025 (US)
(74) Representative: HGF

(57) **Abstract**

A damper test system and method of operating a test system having an actuator is used to test a specimen having a damping constant and/or a spring constant. The damper test system and method estimates impedance of the specimen in real-time; and adjusts in real-time one or more parameters of a controller for the actuator based on the estimated impedance.

## Description

### CROSS-REFERENCE TO RELATED APPLICATIONS

This application claims the benefit of priority from U.S. Provisional Patent Application No. 63/799,732 filed May 2, 2025 for "ADAPTIVE REAL-TIME GAIN SCHEDULING CONTROL LAW FOR DAMPER TEST SYSTEMS," the content of which is hereby incorporated by reference.

### BACKGROUND

Testing systems used to apply controlled force or displacement to a test specimen are inherently complex when precisely controlled motion upon the test specimen is desired. One example of such a test system is a damper testing system used to test a vehicle shock absorber, which comprise primarily just a damper, or a vehicle strut such as a MacPherson strut, which comprises a damper and a spring. Such damper test systems support the damper or strut with one end connected to an actuator and the opposite end connected to a reaction structure. The users or operators of damper testing systems seldom have a background in control science. Therefore, the ideal damper testing system should not require any "tuning" on the part of the user or operator of the damper testing system. Tuning is the process of adjusting the gains in the control law or logic of the controller. A common control law is a PID (Proportional Integral Derivative) controller.

Some common damper test systems used either a hydraulic actuator or a rotary electric actuator. The rotary electric crank dyno connects a traditional rotary motor to the linear actuator through a crank shaft or yolk. In the case of the rotary electric system the operator does not do any tuning. In the case of the hydraulic actuated systems, the operator makes minor adjustments, but not in real-time, or no adjustments at all to the PID tuning.

In a damper testing system the variable to be controlled is motion. For example, displacement or velocity. Controlling motion with a hydraulic actuator or a crank dyno is very immune to external forces produced by the damper specimen. The actuator technology is very "stiff" in a controls sense. The actuator is inherently immune to the external force disturbance from the specimen. The control structure for the hydraulic actuator and crank dyno are relatively simple and well known. In the case of a hydraulic actuator, a single PID loop is typically utilized to provide a servo-valve signal based on the response of a displacement feedback. In the case of the crank dyno, the motor is controlled to a fixed predefined angular velocity using traditional constant angular velocity motor control laws.

A relatively new type of actuation used in damper test Systems uses a linear electric motor such as a permanent magnet synchronous motor. Sometimes referred to as an EMA (Electric Mechanical Actuator). Some advantages the EMA has over hydraulic actuators are energy efficiency, no oil required, and no hydraulic pump required.

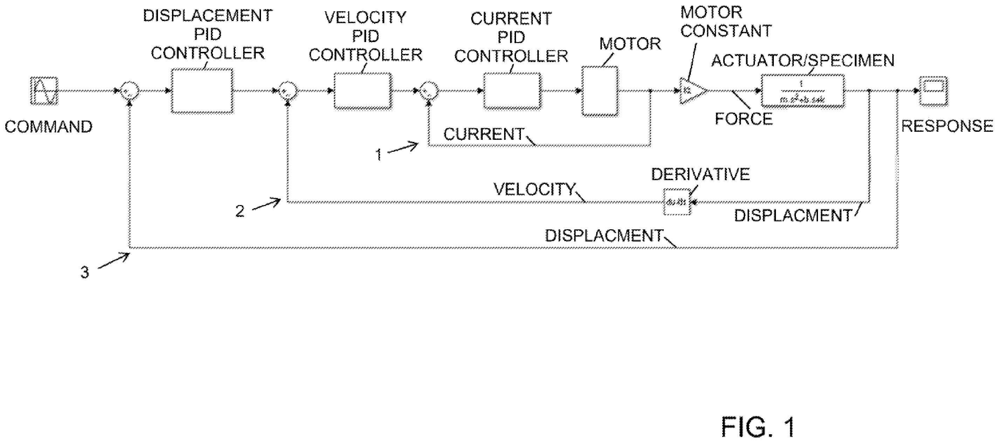

Advantages over crank dyno is the testing profile can be arbitrary (i.e. road profile, arbitrary synthetic repetitive shape) and is not limited to a fixed frequency sinusoid. Some disadvantages are the complexity of the control law and the actuators' inability to reject the external force disturbance of the damper forces. The most typical control law for an EMA includes three cascaded PID controllers. Referring to Fig. 1, an inner loop 1 controls the current to the motor or motors. The force from the motor is proportional to this current. Working outward, the next loop 2 controls the velocity. And then finally the outermost loop 3 controls the displacement. The complexity of this control structure makes it very difficult to tune. And as such it is not reasonable to expect a typical damper test system operator to have the background or the time to tune such a system.

To obtain the desired control (reference command tracking), it is very difficult (and often impractical) to find one fixed tuning set (PID gains) which can perform adequately for a large range of specimens. Compromises must be made to achieve acceptable reference command tracking and robust stability margins. In the specific case of damper testing, the damping constant of the specimen can change drastically from one specimen to the next. For an EMA actuator, the force generated is proportional to the current, and the desired variable to be controlled is motion. Since the actuator generates force, and the specimen "impedance" generates a retarding force, the closed loop control action of an EMA control law is very essential to produce the desired motion in the presence of the damper external force disturbance. This EMA actuator is not as "stiff" in motion control as compared to the historical servo-hydraulic actuator or the crank dyno actuator. The EMA actuator is less immune to this external force disturbance from the damper specimen. Any advancement in tuning PID parameter(s) of a damper testing system would be advantageous in damper testing.

### SUMMARY

A method of operating a test system having an actuator for testing a specimen having a damping constant and/or a spring constant, comprises estimating impedance of the specimen in real-time; and adjusting in real-time one or more parameters of a controller for the actuator based on the estimated impedance.

Further embodiments can include one or more of the following features.

The controller can comprises one or more PID controllers and wherein adjusting comprises adjusting one or more gains of the one or more PID controllers, such as wherein the one or more controllers can comprise cascaded PID control loops. If desired, the cascaded PID control loops can comprise three cascaded control loops being a force loop, a velocity loop and a displacement loop.

Adjusting can comprise adjusting an integral gain of a velocity PID controller in the velocity loop and/or adjusting can comprise adjusting a proportional gain of a velocity PID controller in the velocity loop.

In one embodiment, the controller can comprise an inverse feed forward model and adjusting comprises adjusting one or more parameters of the inverse feed forward model.

Estimating impedance can comprise estimating a damping constant and/or a spring constant of the specimen. In one embodiment, estimating impedance can comprise estimating impedance of the actuator and the specimen, for example, estimating can comprise obtaining an estimate of force for moving the actuator and applying force to the specimen, for example, obtaining an estimate of force can comprise measuring a parameter indicative of force provided by the actuator.

Estimating impedance can comprise estimating a force applied to the specimen and not a force for moving the actuator, for example, estimating the force applied to the specimen and not a force for moving the actuator can comprise obtaining a signal from a load cell coupled in a force path to the specimen.

Another aspect is a damper test system comprising a frame; an actuator, wherein the frame and actuator are configured to apply force to a specimen; and a controller configured to: control the actuator; estimate impedance of the specimen in real-time; and adjust in real-time one or more parameters of a controller for the actuator based on the estimated impedance.

Further embodiments can include one or more of the following features.

The controller can comprise one or more PID controllers and wherein the controller is configured to adjust one or more gains of the one or more PID controllers, such as wherein the one or more controllers can comprise cascaded PID control loops. If desired, the cascaded PID control loops can comprise three cascaded control loops being a force loop, a velocity loop and a displacement loop.

The controller can be configured to adjust an integral gain of a velocity PID controller in the velocity loop, and/or configured to adjust a proportional gain of a velocity PID controller in the velocity loop.

The controller can comprise an inverse feed forward model and the controller is configured to adjust one or more parameters of the inverse feed forward model.

The controller can be configured to estimate a damping constant and/or a spring constant of the specimen, for example, the controller can be configured to estimate impedance of the actuator and the specimen or estimate force for moving the actuator and applying force to the specimen.

The controller can be configured to measure a parameter indicative of force provided by the actuator, and /or the controller can be configured to estimate a force applied to the specimen and not a force for moving the actuator.

A load cell can be coupled in a force path to the specimen, wherein the controller is coupled to receive a signal from the load cell.

### BRIEF DESCRIPTION OF DRAWINGS

FIG. 1 is a schematic representation of control logic or law for a damper test system.
FIG. 2 is a pictorial representation of a damper test system.
FIG. 3 is a schematic diagram of a control law or logic of a first embodiment of the present invention for a damper test machine.
FIG. 4 is a schematic diagram of a control law or logic of a second embodiment of the present invention for a damper test machine.
FIG. 5 is a block diagram depicting certain components of a computing device.

### DETAILED DESCRIPTION

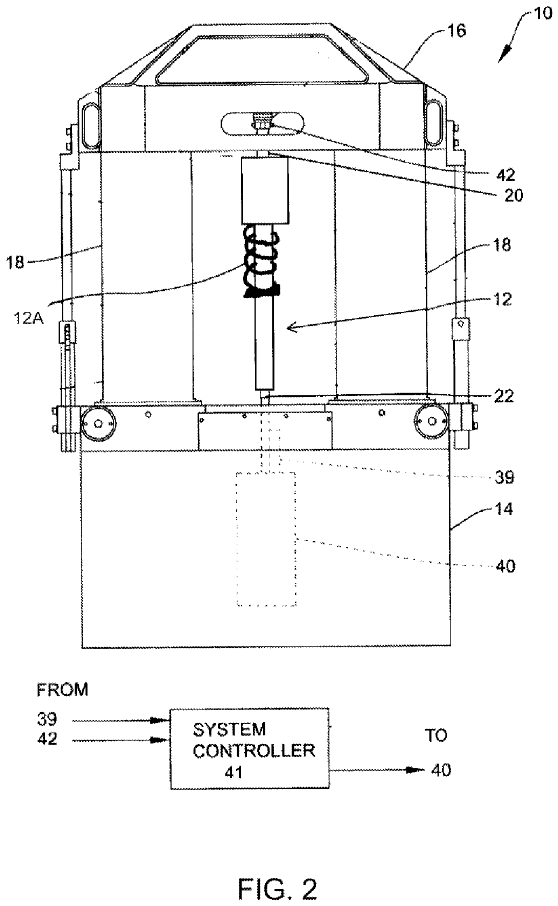

A testing system 10 for applying loads to a test specimen 12 is illustrated in FIG. 2 and includes a base 14. A pair of vertical columns 18 is mounted to the base 14 and extends vertically to support across a crosshead 16 above the base 14. A first specimen support 20 is configured to engage a first end the test specimen 12. A second specimen support 22 is configured to engage a second end of the test specimen 12. In the embodiment illustrated, the test specimen 12 is a damper (e.g. vehicle shock absorber), which may or may include a spring 12A, in which case if present is commonly referred to as a strut.

An actuator 40 (e.g. hydraulic or electric) is mounted to the base 14 and is connected to the specimen support 22. A displacement sensor such as but not limited to a linear encoder, LVDT or the like 39 is operatively coupled to the actuator 40 so as to measure and provide a displacement signal indicative of displacement of the end of the actuator 40 and the specimen support connected thereto. In this embodiment, a load cell 42 is mounted to the crosshead 16 and is connected to the second specimen support 20.

Although the testing system 10 is specifically designed to test damper specimens such as schematically indicated in FIG. 2 at 12 having opposite ends joined to the first damper support 20 and a second damper support 22, testing system 10 can be configured to test elastomeric devices, wherein the concepts herein described can be used to control operation of the actuator 40.

The actuator 40 is controlled by a system controller 41 according to the test to be executed and suitable force signals are obtained from the load cell 42 while motion signals can be obtained from displacement, velocity or acceleration sensors. In the embodiment illustrated, a displacement sensor or encoder 39 is used to measure movements of the actuator 40. If desired, a signal indicative of force can also be obtained by measuring the current provided to the actuator 40 if embodied as a linear electric motor through a suitable electric drive, not shown, or if embodied as a hydraulic actuator, through a servo-hydraulic system, not shown. It should be noted, fluid pressure measurements in the case of a hydraulic actuator could also provide an indication of force applied to the test specimen 12.

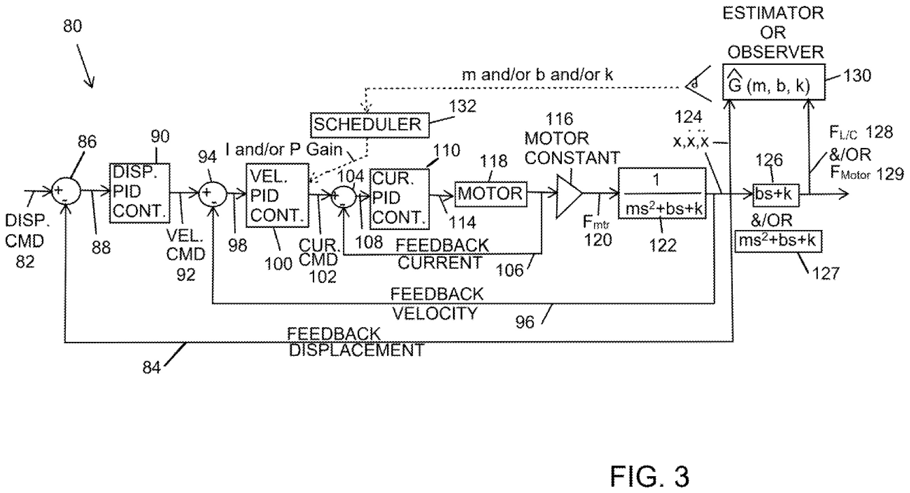

The control law or logic for the controller 41 is illustrated in FIG.3 at 80. The desired command displacement signal for the actuator 40 is provided at 82. Feedback displacement 84 is received by a summer 86 to yield a displacement error at 88. The displacement error is provided to a displacement PID controller 90 to yield a velocity command 92 that in turn is provided to summer 94, which combined with velocity feedback 96, provides a velocity error 98. The velocity error 98 is provided to a velocity PID controller 100 to yield a current command 102 that in turn is provided to summer 104, which combined with current feedback 106, provides a current error 108. The current error 108 is provided to a current PID controller 110 to yield the voltage for a motor 114. The motor 118 has a torque or force constant 116, the output of which is a force 120 of the motor 118.

An aspect of the invention proposes a control law which estimates the specimen impedance in real-time and adjusts (also in real-time) one or more controller 80 PID gains to optimize the control law for the specific test specimen installed in test system.

At 120 the force of the motor is ${F}_{motor} = m {x}^{¨} + b \dot{x} + kx$ Where:
*m* = *mass* (primarily of the motor but to a lesser extent moving mass of the test specimen, e.g. damper)
*b* = *damping constant* (primarily of the test specimen damper)
*k = spring constant* (primarily of the test specimen damper)
*x = actuator displacement*
*ẋ* = *actuator velocity*
*ẍ* = *actuator acceleration*

Or alternatively in the Laplace Domain the transfer function of the system impedance (actuator and test specimen damper) is: $\frac{F \left(s\right)}{X \left(s\right)} = {ms}^{2} + bs + k$

It is noted that the force of the motor comprises the inertial force (*mẍ*) for moving the combined mass of the moving mass of the actuator 40 and to a lesser extend the moving mass of the test specimen. However, there is also an external or disturbing force from the test specimen *bẋ + kx.* Generally, the moving mass being predominately the moving mass of the actuator 41 is a constant and the controller 80 can be tuned to it. However, each test specimen is different and thus the disturbing force from the test specimen *bẋ + kx* will vary and to have a better performing test machine would be to be able to tune the controller 80 to account for the variances in b and k.

Referring back to FIG. 3, applying the force 120 to the transfer function of the forced response at 122 yields quantities of motion (x, *ẋ, ẍ*) indicated at 124. Outside of the control loop, the motion 124 is into the test specimen (*bẋ + kx*) represented at 126 is measured by the load cell 42 at 128 as a force or alternatively the motor force can be estimated at 129 from the current feedback at 106 along with the torque or force constant at 116.

Using the quantities of motion (x, *ẋ,ẍ*) indicated at 124 and the force applied to test specimen, herein measured by the load cell 42, system identification can be performed. One form of system identification is by using an estimator 130. Stated another way, the test specimen force can be estimated by the load cell 42 measurement, and the motion (displacement and higher order derivatives) can be estimated by the actuator displacement measurement and its derivatives (x, *ẋ,ẍ*)*.* Note that in this context, measurements are considered as one form of an estimation. The dynamic parameters of this representation of the system impedance are m, b, and k. A more sophisticated specimen impedance model can be used and a nonlinear specimen can be used. These model parameters can be estimated through different techniques such as a Kalman Filter or another form of estimator or an observer or a least squares optimization algorithm or other forms of system identification.

Having determined estimation of primarily b, and k via, for example, the observer, these values can be used to change one or more gains in the controller 80. It has been found that the gains of the velocity PID controller 100 can be very influential to system performance. In particular, the estimation of damping b can be used to adjust the gain of the integral aspect of the velocity PID controller 100, and/or the estimation of spring constant k can be used to adjust the gain of the proportional and integral aspect of the velocity PID controller 100. However, this should not be considered limiting in that other gains of the controller 80 can be adjusted. One convenient manner for finding the appropriate gain adjustment of b and/or k is using a lookup table, herein embodied in a scheduler 110, although other techniques for correlating b with the integral gain adjustment, and/or k with the proportional and integral gain adjustment can be employed such as through linear or non-linear representations.

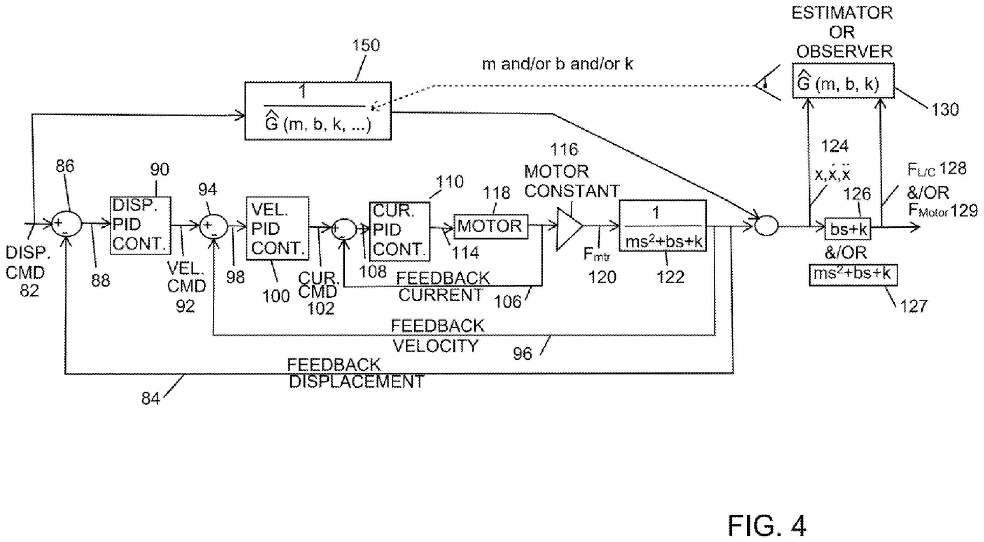

The foregoing describes a method to adjust one or more PID tuning parameters based on a real-time estimation of the specimen impedance. Similar to adjusting the PID tuning parameters, another technique or method could be used to estimate dynamic parameters for a feedforward inverse model control scheme. Referring to FIG. 4, an inverse feedforward model 150 could be a linear representation or a non-linear representation of the test specimen. The inverse feedforward model 150 (for example, a digital filter, a non-linear model, simulation model, etc.) would receive the command displacement signal 82. Also, the feedforward correction could also be implemented as a pre-filter applied at the front end of the summing junction with the input to the filter being the reference command and the output from the filter could be a modified reference command to the PID summing junction.

It should be noted that if the test specimen comprises only a damper then only the damping b may be the only parameter estimated with a corresponding adjustment in the integral gain, for example in one embodiment, of the velocity controller 100 in the embodiment of FIG. 3. However, if the test specimen comprises a spring or a damper with a spring 12A then the spring constant k may also be estimated with a corresponding adjustment in the proportional and integral gain, for example in one embodiment, of the velocity controller 100. Additionally, any other PID gains in any of the three cascaded loops (displacement, velocity, or current) could be adjusted as a result of the estimated dynamic parameters. A user operated input selector such as a button or the like can be used by the operator to identify the test specimen as comprising a damper and/or spring. Different estimation algorithms can be used depending upon the selection.

In one embodiment, the rate at which the estimator 130 identifies the specimen impedance parameters and the rate at which the PID controller gains can be changed will be adjustable. And it is desirable that the convergence rate or adaptive rate of these terms be slower (for example, orders of magnitude slower) than the PID correction rates to avoid interaction of these two feedback mechanisms.

If desired, bounds may be placed on the allowable parameter estimations (e.g. b and k) and the allowable adjustable controller gains.

In one embodiment, the estimator 130 may be allowed to estimate only while exposed to a range of inputs such as a specific range of motion or a specific range of damper force. This may be desirable to prevent the estimator 130 from making incorrect estimation from excitations which may be too large or too small and susceptible to errors due to signal to noise ratio and due to non-linearities.

In one embodiment, the user may be advised to perform some preliminary learning cycles before the actual test to allow the estimator and subsequent PID gain adjustment to learn the characteristics of the specimen. Likewise, it might be desirable that the gains revert to a preset set of values that might be suitable for many if not all test specimens when a new test specimen is installed, or for example, when the power to the test machine is turned on, or otherwise enabled after a new test specimen is installed. This is helpful so as to not have inappropriate gains for a new test specimen to be tested. Thus, the increase of gains via the estimator 130 and therefore the decrease in stability will only take place after an estimation of the current specimen has taken place.

For example, the gains can be set at values where damping b equals zero, which would be the case for no specimen at all. However, the test machine is in a very stable state, although the performance may be lacking. Once the test specimen is installed and the test machine turned on the estimator 130 will ascertain an estimation for the impedance parameters. How quickly it ascertains this estimation may be dependent on the convergence rate of the estimator 130, the values for the Kalman Filter gains or other parameters of the estimator being used.

Commonly, the estimator 130 would run in the background at all times but this is not a requirement.

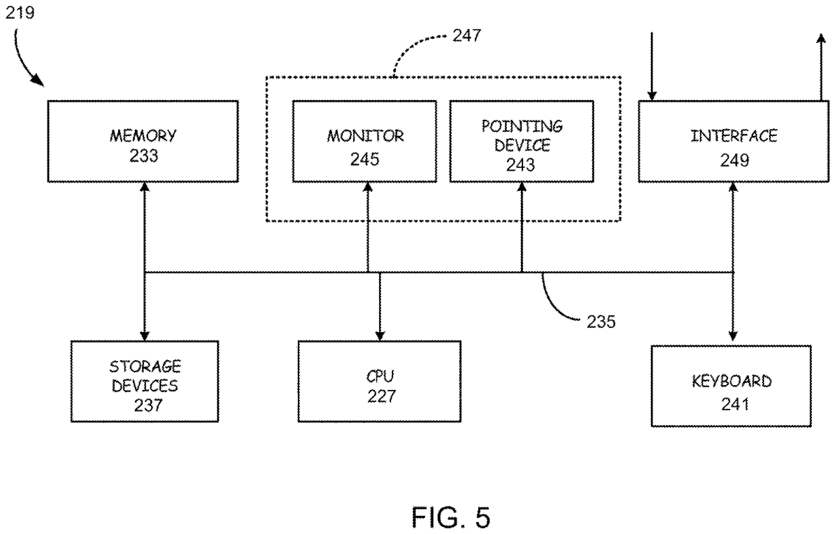

The controller 41 can be implemented on a digital and/or analog computer. FIG. 5 and the related discussion provide a brief, general description of a suitable computing environment in which the controller 41 may be implemented. Although not required, the controller was described, at least in part, in the general context of computer-executable instructions, such as program modules and block diagrams, being executed by a computer 219. Generally, program modules include routine programs, objects, components, data structures, etc., which perform particular tasks or implement particular abstract data types. Those skilled in the art can implement the description above and/or block diagrams to computer-executable instructions storable on a computer readable medium. Moreover, those skilled in the art will appreciate that the invention may be practiced with other computer system configurations, including multiprocessor systems, networked personal computers, mini computers, main frame computers, and the like. Aspects of the invention may also be practiced in distributed computing environments where tasks are performed by remote processing devices that are linked through a communications network. In a distributed computer environment, program modules may be located in both local and remote memory storage devices.

The computer 219 illustrated in FIG. 5 comprises a conventional computer having a central processing unit (CPU) 227, memory 233 and a system bus 235, which couples various system components, including memory 233 to the CPU 227. System bus 235 may be any of several types of bus structures including a memory bus or a memory controller, a peripheral bus, and a local bus using any of a variety of bus architectures. The memory 233 includes read only memory (ROM) and random access memory (RAM). A basic input/output (BIOS) containing the basic routine that helps to transfer information between elements within the computer 219, such as during start-up, is stored in ROM. Storage devices 237, such as a hard disk, a disk drive, an optical disk drive, etc., are coupled to the system bus 235 and are used for storage of programs and data. It should be appreciated by those skilled in the art that other types of computer readable media that are accessible by a computer, such as magnetic cassettes, flash memory cards, digital video disks, random access memories, read only memories, and the like, may also be used as storage devices. Commonly, programs are loaded into memory 233 from at least one of the storage devices 237 with or without accompanying data.

Input devices such as a keyboard 241 and pointing device (mouse) 243, or the like, allow the user to provide commands to the computer 219. A monitor 245 or other type of output device is further connected to the system bus 235 via a suitable interface and provides feedback to the user. If the monitor 245 is a touch screen, the pointing device 243 can be incorporated therewith. The monitor 245 and typically an input pointing device 243 such as mouse together with corresponding software drivers form a graphical user interface (GUI) 247 for computer 219 that is particularly useful with aspects described below.

Interfaces 249 on the system controller 41 allow communication. Interface 249 also represents circuitry used to send signals or receive signals as described above as well as other parameters of the physical system such as the status of locks, doors, indicators, whether power is applied, etc. Commonly, such circuitry comprises digital-to-analog (D/A) and analog-to-digital (A/D) converters as is well known in the art. The controller 41 can also comprise an analog controller with or without digital supervision as is well known. Functions of the controller 41 can be combined into one computer system. In another computing environment, controller 41 is a single board computer operable on a network bus of another computer, or another supervisory computer. The schematic diagram of FIG. 5 is intended to generally represent a computer for these and other suitable computing environments.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. A method of operating a test system having an actuator for testing a specimen having a damping constant and/or a spring constant, the method comprising:
estimating impedance of the specimen in real-time; and
adjusting in real-time one or more parameters of a controller for the actuator based on the estimated impedance.

2. The method of claim 1, wherein the controller comprises one or more PID controllers and wherein adjusting comprises adjusting one or more gains of the one or more PID controllers, wherein optionally the one or more controllers comprise cascaded PID control loops such as three cascaded control loops being a force loop, a velocity loop and a displacement loop.

3. The method of claim 2, wherein adjusting comprises adjusting an integral gain of a velocity PID controller in the velocity loop and/or wherein adjusting comprises adjusting a proportional gain of a velocity PID controller in the velocity loop.

4. The method of claim 1 wherein the controller comprises an inverse feed forward model and adjusting comprises adjusting one or more parameters of the inverse feed forward model.

5. The method of any one of claim 1-4, wherein estimating impedance comprises estimating a damping constant and/or a spring constant of the specimen, or wherein estimating impedance comprises estimating impedance of the actuator and the specimen, and optionally wherein estimating comprises obtaining an estimate of force for moving the actuator and applying force to the specimen or wherein obtaining an estimate of force comprises measuring a parameter indicative of force provided by the actuator.

6. The method of claim 5, wherein estimating impedance comprises estimating a force applied to the specimen and not a force for moving the actuator.

7. The method of claim 6, wherein estimating the force applied to the specimen and not a force for moving the actuator comprises obtaining a signal from a load cell coupled in a force path to the specimen.

8. A damper test system comprising:
a frame;
an actuator, wherein the frame and actuator are configured to apply force to a specimen;
a controller configured to:
control the actuator;
estimate impedance of the specimen in real-time; and
adjust in real-time one or more parameters of a controller for the actuator based on the estimated impedance.

9. The system of claim 8, wherein the controller comprises one or more PID controllers and wherein the controller is configured to adjust one or more gains of the one or more PID controllers, and optionally wherein the one or more controllers comprise cascaded PID control loops such as wherein the cascaded PID control loops comprise three cascaded control loops being a force loop, a velocity loop and a displacement loop.

10. The system of claim 9, wherein the controller is configured to adjust an integral gain of a velocity PID controller in the velocity loop, and/or wherein the controller is configured to adjust a proportional gain of a velocity PID controller in the velocity loop.

11. The system of claim 8 wherein the controller comprises an inverse feed forward model and the controller is configured to adjust one or more parameters of the inverse feed forward model.

12. The system of any one of claim 8-11, wherein the controller is configured to estimate a damping constant and/or a spring constant of the specimen, or wherein the controller is configured to estimate impedance of the actuator and the specimen.

13. The system of claim 12, wherein the controller is configured to estimate force for moving the actuator and applying force to the specimen.

14. The system of claim 13, wherein the controller is configured to measure a parameter indicative of force provided by the actuator.

15. The system of any one of claims 12-14, wherein the controller is configured to estimate a force applied to the specimen and not a force for moving the actuator, and optionally wherein the system further comprises a load cell coupled in a force path to the specimen, and wherein the controller is coupled to receive a signal from the load cell.
